# EUROPÄISCHE PATENTSCHRIFT

(11) **EP 2 193 298 B1**
(45) Veröffentlichungstag und Bekanntmachung des Hinweises auf die Patenterteilung: **11.05.2011**
(21) Anmeldenummer: 08707558.6
(22) Anmeldetag: 06.02.2008
(51) Int. Cl.: F16K 31/08

(54) **VENTIL**
VALVE
SOUPAPE

(43) Veröffentlichungstag der Anmeldung: 09.06.2010
(73) Patentinhaber: FESTO AG & Co. KG, 73734 Esslingen (DE)
(72) Erfinder: MUNZ, Gebhard, 73614 Schorndorf (DE); GASSMANN, Andreas, 71384 Weinstadt (DE); GIOUSOUF, Metin, 73732 Esslingen (DE); ZANKER, Michael, Stefan, 73733 Esslingen (DE); BLASSMANN, Lars, 73732 Esslingen (DE)
(74) Vertreter: Abel, Martin
(86) Internationale Anmeldenummer: PCT/EP2008/000889
(87) Internationale Veröffentlichungsnummer: WO 2009/097868

(56) Entgegenhaltungen:
- EP-A- 1 207 329
- EP-A- 1 298 371
- WO-A-98/57081
- US-A- 4 343 329

## Beschreibung

Die Erfindung betrifft ein Ventil, mit zwei in einem Ventilgehäuse relativ zu diesem und relativ zueinander bewegbar angeordneten ersten und zweiten Steuerelementen, von den das erste Steuerelement mit einem einem ersten Ventilsitz zugeordneten ersten Verschlussmittel und das zweite Steuerelement mit einem einem zweiten Ventilsitz zugeordneten zweiten Verschlussmittel bewegungsgekoppelt ist, wobei jedes Verschlussmittel durch Betätigung des mit ihm bewegungsgekoppelten Steuerelementes in einer am zugeordneten Ventilsitz anliegenden Schließstellung oder in mindestens einer mehr oder weniger weit von diesem Ventilsitz abgehobenen Offenstellung positionierbar ist, und mit elektrisch aktivierbaren Antriebsmitteln zum Betätigen der Steuerelemente.

Die EP 1 207 329 B1 offenbart ein nach diesem Prinzipien aufgebautes Ventil in Form eines Piezoventils. Hier sind zwei von Biegewandlern gebildete Steuerelemente an einem Ende fest miteinander verbunden und am Ventilgehäuse gelagert. Die entgegengesetzten Endabschnitte der Biegewandler sind als Verschlussmittel ausgebildet, die jeweils über einen Ventilsitz hinwegragen, um je nach Betätigungszustand einen dem Ventilsitz zugeordneten Ventilkanal freizugeben oder zu verschließen. Durch die starre Verbindung der Biegewandler in dem Lagerbereich lässt sich eine Vergrößerung des Stellweges und der Stellkraft erzielen. Problematisch ist allerdings die sehr aufwendige Herstellung der Biegewandler, die in einer einstückigen Biegewandlereinheit zusammengefasst sind. Außerdem sind sehr hohe Ansteuerspannungen erforderlich und die Lebensdauer kann durch Rißbildung in der Piezokeramik beeinträchtigt werden.

Aus der EP 0 916 049 B1 ist bereits ein Magnetventil bekannt, bei dem ein lamellenförmiges Steuerelement mit einem Permanentmagnet bestückt ist, der mit einem Elektromagnet kooperiert. Durch den Permanentmagnet wird das Steuerelement im Zusammenwirken mit zwei Weicheisenteilen alternativ in einer von zwei Schaltstellungen festgehalten. Durch impulsartiges Betätigen des Elektromagneten kann das Steuerelement zwischen seinen beiden Schaltstellungen umgeschaltet werden.

Es ist die Aufgabe der vorliegenden Erfindung, ein zur Steuerung zweier Ventilkanäle geeignetes Ventil zu schaffen, das einfacher herstellbar ist und eine lange Lebensdauer verspricht.

Zur Lösung dieser Aufgabe ist erfindungsgemäß vorgesehen, dass die Antriebsmittel als den beiden Steuerelementen gemeinsam zugeordnete elektrodynamische Antriebseinrichtung ausgebildet sind, die zwei zusammenwirkende, relativ zueinander und relativ zum Ventilgehäuse bewegliche Antriebseinheiten in Form einer Permanentmagneteinheit und einer elektrisch bestrombaren Spuleneinheit enthält, wobei die Permanentmagneteinheit an dem ersten Steuerelement und die Spuleneinheit an dem zweiten Steuerelement angreift, derart, dass die Steuerelemente durch entgegengesetzte Bestromung der Spuleneinheit im Sinne der Ausführung zweier einander entgegengesetzt gerichteter Relativbewegungen antreibbar sind.

Somit können die beiden Steuerelemente mittels einer einzigen elektrodynamischen Antriebseinrichtung betätigt werden, die den beiden Steuerelementen gemeinsam zugeordnet ist. Die Permanentmagneteinheit der Antriebseinrichtung greift am ersten Steuerelement an, die Spuleneinheit am zweiten Steuerelement der Antriebseinrichtung. Durch Bestromung der Spuleneinheit können die beiden Antriebseinheiten, also die Permanentmagneteinheit und die Spuleneinheit, zu Relativbewegungen angetrieben werden, um dadurch auf beide Verschlussmittel einzuwirken. Die Richtung der jeweiligen Relativbewegung hängt von der Richtung der Bestromung der Spuleneinheit ab, sodass die Möglichkeit besteht, durch Umkehrung des Stromflusses wahlweise eine Beaufschlagung im Sinne einer ersten Relativbewegung oder im Sinne einer zweiten Relativbewegung hervorzurufen, die einander entgegengesetzt sind. Ist die Antriebseinrichtung beispielsweise so ausgebildet, dass die Antriebseinheiten je nach Relativposition mehr oder weniger weit ineinander eingetaucht sind, repräsentiert die eine Relativbewegung den Vorgang des ineinander Eintauchens und die andere Relativbewegung den Vorgang des auseinander Ausfahrens.

Somit liegt eine äußerst kompakte Anordnung vor, die wenig verschleißanfällig ist und nur geringe Ansteuerspannungen erfordert. Die Herstellung lässt sich verhältnismäßig kostengünstig bewerkstelligen. Außerdem wird das Betriebsverhalten des Ventils durch Schwankungen in der Umgebungstemperatur und durch Feuchtigkeitseinflüsse kaum beeinträchtigt.

Durch geeignete Anordnung von gehäusefesten Anschlagmitteln im Verstellweg der Steuerelemente kann auf das Bewegungsverhalten der Steuerelemente bei der Aktivierung der Antriebseinrichtung Einfluss genommen werden. Wird eines der Steuerelemente durch Anschlagmittel an einer Weiterbewegung gehindert, führt nurmehr das andere Steuerelement eine weitergehende Bewegung aus. Die Relativbewegung zwischen den beiden Steuerelementen kann sich also in einer gleichzeitigen Bewegung beider Steuerelemente äußern oder in der Bewegung nur eines der Steuerelemente bei gleichzeitig stillstehendem anderen Steuerelement.

Das geschilderte Betriebsverhalten lässt sich besonders vorteilhaft realisieren, wenn die Funktion der Anschlagmittel von den Ventilsitzen übernommen wird. In diesem Fall kann erreicht werden, dass je nach Relativbewegung entweder das eine oder das andere Verschlussmittel die Schließstellung einnimmt, während gleichzeitig das andere Verschlussmittel in eine Offenstellung bewegt wird.

Durch Veränderung der Stromstärke bei der elektrischen Ansteuerung der Spuleneinheit kann das Maß der im Rahmen der Relativbewegungen erzielbaren Auslenkung der Steuerelemente zwischen Maximalwerten variiert werden, insbesondere stufenlos. Auf diese Weise ist es insbesondere möglich, ein und dasselbe Verschlussmittel in verschiedenen Offenstellungen zu positionieren, in denen es unterschiedlich weit vom Ventilsitz abgehoben ist und folglich einen unterschiedlich großen Strömungsquerschnitt freigibt. Dies ermöglicht einen besonders vorteilhaften Betrieb des Ventils als Proportionalventil.

Vorteilhafte Weiterbildungen der Erfindung gehen aus den Unteransprüchen hervor.

Besonders kompakte Abmessungen sind realisierbar, wenn die beiden Antriebseinheiten so ausgebildet sind, dass sie positionsabhängig mehr oder weniger weit ineinander eintauchen. Hierbei kommt insbesondere ein Tauchspulenprinzip zur Anwendung, bei dem die Spuleneinheit mehr oder weniger weit in die Permanentmagneteinheit eintaucht, insbesondere in koaxialer Anordnung.

Zur Vorgabe der Bestromungsrichtung der Spuleneinheit ist zweckmäßigerweise eine geeignete Steuereinrichtung vorhanden. Mit ihr lässt sich zweckmäßigerweise auch die Dauer der Bestromung und folglich die Dauer der Einhaltung der jeweils gewünschten Ventilstellung kontrollieren. Ist die Steuereinrichtung zur variablen Vorgabe der Bestromungsintensität ausgebildet, lässt sich nicht nur ein rein digitales Schaltverhalten der Steuerelemente realisieren, sondern bei Bedarf eine proportionale Betriebsweise, bei der die Auslenkung der Steuerelemente proportional zur Stromstärke regulierbar ist.

Bei einer zweckmäßigen Ausgestaltung sind die Verschlussmittel und die Ventilsitze so angeordnet, dass entsprechend der hervorgerufenen Relativbewegung entweder das eine oder das andere Verschlussmittel unter Einnahme der Schließstellung am zugeordneten Ventilsitz anliegt und das andere Verschlussmittel, auf Grund der hierdurch erzeugten Abstützwirkung, eine vom zugeordneten Ventilsitz abgehobene Offenstellung einnimmt. In diesem Zusammenhang ist es von besonderem Vorteil, wenn eine Auslegung getroffen ist, bei der bei unbestromter Spuleneinheit eine Grundstellung vorliegt, in der beide Verschlussmittel die Schließstellung einnehmen. Dies kann beispielsweise durch geeignete Federmittel realisiert werden, die auf die Steuerelemente einwirken. Ausgehend von der Grundstellung verlagert sich dann je nach Bestromungsrichtung nur das eine oder andere Verschlussmittel in die Offenstellung, während das andere Verschlussmittel in der Schließstellung verbleibt und dadurch die an ihm angeordnete Antriebseinheit gehäusefest abstützt. Die Relativbewegungen zwischen den beiden Steuerelementen resultieren in diesem Fall stets aus der Bewegung nur eines der Steuerelemente relativ zu dem gehäusefest abgestützten anderen Steuerelement. Die Ventilsitze umschließen zweckmäßigerweise jeweils einen in eine Ventilkammer des Ventils einmündenden eigenen Ventilkanal. Zusätzlich zu diesen beiden Ventilkanälen mündet zweckmäßigerweise noch mindestens noch ein weiterer, dritter Ventilkanal in die Ventilkammer ein, der ständig offen ist und dessen Strömungsquerschnitt durch die Steuerelemente nicht beeinflußbar ist. Auf diese Weise kann beispielsweise ein 3/3-Wegeventil realisiert werden, insbesondere in einer Ausgestaltung als Proportionalventil.

Die Verschlussmittel sind zweckmäßigerweise unmittelbar am jeweils zugeordneten Steuerelement angeordnet. Es kann sich bei ihnen um aus Material mit abdichtenden Eigenschaften bestehende Dichtungselemente handeln, die angeklebt oder auf sonstige Weise fixiert sind. Es ist aber auch möglich, die Steuerelemente so auszubilden, dass sie unmittelbar selbst die Verschlussmittel definieren.

Ein besonders kompaktes Ventil mit großem Ventilhub ist möglich, wenn die Steuerelemente lamellenförmig ausgebildet und durch die Antriebseinrichtung in zueinander parallelen oder zusammenfallenden Auslenkebenen auslenkbar sind. Hierbei können die Steuerelemente zumindest entlang eines Längenabschnittes längsseits nebeneinander angeordnet sein. Die Antriebseinrichtung befindet sich hier vorzugsweise im Bereich zweier nebeneinander liegender, in die gleiche Richtung weisender erster Endabschnitte der Steuerelemente und kann insbesondere zwischen diesen Steuerelementen angeordnet sein.

Bevorzugt sind die lamellenförmigen Steuerelemente an ihren der Antriebseinrichtung entgegengesetzten zweiten Endabschnitten am Ventilgehäuse gelagert. Sind die Steuerelemente federelastisch ausgebildet, kann die Lagerung eine feste Einspannung sein, sodass die Steuerelemente bei ihrer Auslenkung durchgebogen werden. Zweckmäßiger erscheint eine Bauform, bei der die Steuerelemente an ihren Lagerstellen bezüglich dem Ventilgehäuse verschwenkbar gelagert und als starre Komponenten ausgebildet sind, sodass sie bei ihrer Auslenkung jeweils insgesamt eine Schwenkbewegung um ihre Lagerstelle durchführen.

Die Verschlussmittel sind vorzugsweise axial zwischen der Antriebseinrichtung und den gehäuseseitigen Lagerstellen an den Steuerelementen angeordnet. Auf diese Weise lässt sich, je nach Abstand zwischen den Verschlussmitteln und der Lagerstelle, der beim Verschwenken der Steuerelemente realisierbare Hub sowie die Schließkraft nach Bedarf vorgeben. Dadurch ist die Kraft-Weg-Kennlinie an die in der jeweiligen Anwendung geforderten Werte leicht anpassbar. Es sind auch voneinander abweichende Anpassungen der beiden Steuerelemente möglich, derart, dass die Kraft-Weg-Kennlinien der beiden Steuerelemente voneinander abweichen.

Eine besonders vorteilhafte Bauform sieht vor, dass die beiden Antriebseinheiten ausschließlich an den Steuerelementen aufgehängt sind und im Übrigen im Ventilgehäuse frei schweben, sich also nicht zusätzlich am Ventilgehäuse abstützen oder am Ventilgehäuse geführt sind. Dies macht die Herstellung und Montage besonders einfach und schafft eine große Unabhängigkeit gegenüber Fertigungs- und Montagetoleranzen.

Schließlich sei noch auf die Möglichkeit verwiesen, im Bereich der Antriebseinrichtung ein sogenanntes Ferrofluid zu plazieren. Hierbei handelt es sich um eine Flüssigkeit, die auf ein magnetisches Feld reagiert. Sie befindet sich dort, wo ansonsten ein Luftspalt um die Spuleneinheit herum angeordnet wäre und wird durch das Feld der Permanentmagneteinheit gehalten. Das Ferrofluid bewirkt unter anderem eine Kühlung der Spuleneinheit sowie eine Dämpfung der sich bewegenden Komponenten.

Nachfolgend wird die Erfindung anhand der beiliegenden Zeichnungen näher erläutert. In dieser zeigen:

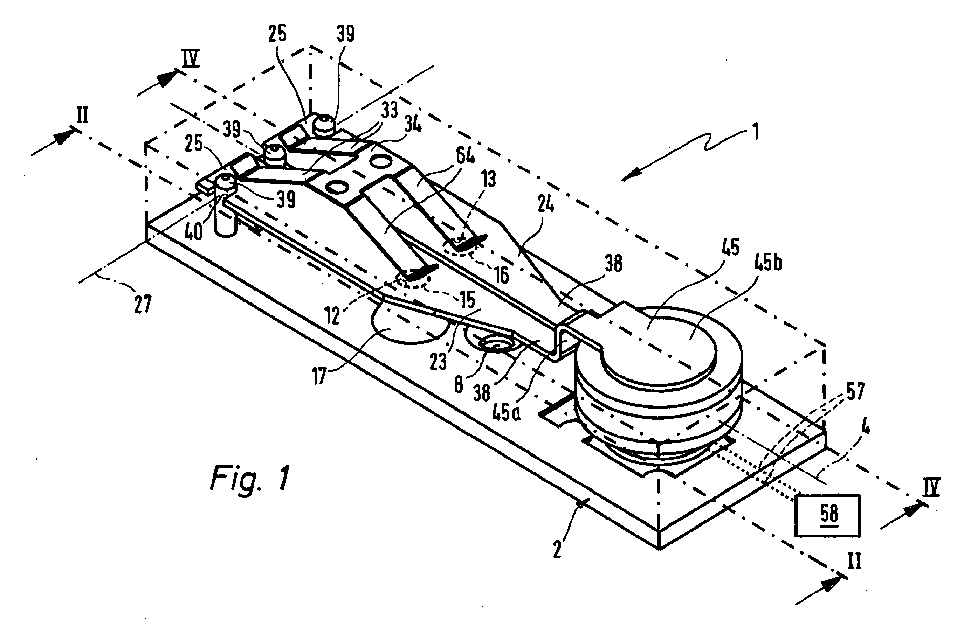

- Figur 1: eine bevorzugte erste Bauform des erfindungsgemäßen Ventils in einer perspektivischen Darstellung, wo- bei das Ventilgehäuse teilweise nur strichpunktiert angedeutet ist,
- Figur 2: einen Längsschnitt durch das Ventil aus Figur 1 ge- mäß Schnittlinie II-II in einer Grundstellung, in der beide Verschlussmittel die Schließstellung ein- nehmen,
- Figur 3: das Ventil aus Figur 1 in wiederum einem Längs- schnitt gemäß Schnittlinie II-II, hier allerdings in einer ersten aktivierten Stellung, in der das eine Verschlussmittel eine Offenstellung und das andere Verschlussmittel die Schließstellung ein- nimmt, und
- Figur 4: im Längsschnitt gemäß Schnittlinie IV-IV eine zwei- te aktivierte Stellung des Ventils, wobei in bezüg- lich Figur 3 vertauschter Weise bei dem einen Ver- schlussmittel eine Offenstellung und bei dem ande- ren Verschlussmittel die Schließstellung vorliegt.

Das in seiner Gesamtheit mit Bezugsziffer 1 bezeichnete Ventil enthält ein Ventilgehäuse 2, das eine Ventilkammer 3 umgrenzt. In dieser Ventilkammer 3 sind die funktionellen Komponenten des Ventils 1 untergebracht.

Das Ventilgehäuse 2 besitzt eine Hauptachse 4, die beim Ausführungsbeispiel mit seiner Längsachse zusammenfällt. Bevorzugt hat das Ventilgehäuse 2 eine längliche Gestalt.

Eine erste Wandung 5 des Ventilgehäuses 2, die beim Ausführungsbeispiel den Boden der Ventilkammer 3 definiert, ist von einem ersten und zweiten Ventilkanal 6, 7 durchsetzt. Der erste Ventilkanal 6 mündet mit einer ersten Kanalmündung 12 in die Ventilkammer 3 ein, ebenso der zweite Ventilkanal 7 mit einer zweiten Kanalmündung 13. Die erste Kanalmündung 12 ist von einem ersten Ventilsitz 15 umrahmt, die zweite Kanalmündung 13 von einem zweiten Ventilsitz 16. Vorzugsweise befinden sich die Ventilsitze 15, 16 jeweils an der Oberseite einer an der ersten Wandung 5 angeordneten und in die Ventilkammer 3 hineinragenden Erhebung 17, 18. Diese kann zum zugeordneten Ventilsitz 15, 16 hin insbesondere konisch verjüngt ausgebildet sein.

Mit ihren der ersten und zweiten Kanalmündung 12, 13 entgegengesetzten äußeren Kanalmündungen 22 sind die beiden Ventilkanäle 6, 7 zur Außenfläche der ersten Wandung 5 hin offen. Dort können vom Ventil 1 wegführende Fluidleitungen angeschlossen werden, die nicht weiter abgebildet sind.

Die beiden Kanalmündungen 12, 13 und die ihnen zugeordneten Ventilsitze 15, 16 sind quer zu der Hauptachse 4 mit Abstand zueinander angeordnet. Exemplarisch liegen sie in der Achsrichtung der Hauptachse 4 auf gleicher Höhe. Sie können allerdings in dieser Achsrichtung auch versetzt zueinander angeordnet sein.

An anderer Stelle mündet ein dritter Ventilkänal 8 mit einer dritten Kanalmündung 14 ebenfalls in die Ventilkammer 3 ein. Auch er durchsetzt zweckmäßigerweise die erste Wandung 5.

In der Ventilkammer 3 befinden sich ein erstes Steuerelement 23 und ein bezüglich dem ersten Steuerelement 23 gesondert ausgebildetes zweites Steuerelement 24. Obgleich prinzipiell auch andere Gestaltungsformen möglich wären, hat es sich als besonders zweckmäßig erwiesen, die beiden Steuerelemente 23, 24 lamellenförmig auszubilden. Es handelt sich also um längliche, bevorzugt streifenförmig gestaltete Bauteile, deren Längsachsen parallel zueinander verlaufen. Ihre Längsachsen erstrecken sich parallel zu der Hauptachse 4, wobei sie rechtwinkelig zu dieser Hauptachse 4 nebeneinander platziert sind. Die Hauptausdehnungsebenen der beiden Steuerelemente 23, 24 verlaufen insbesondere quer zur Längsachse der beiden Kanalmündungen 12, 13.

Das erste Steuerelement 23 erstreckt sich über den ersten Ventilsitz 15 hinweg. In gleicher Weise erstreckt sich das zweite Steuerelement 24 über den zweiten Ventilsitz 16 hinweg.

Beide Steuerelemente 23, 24 sind an ihren in die gleiche Richtung weisenden einen, ersten Endabschnitten 25 am Ventilgehäuse 2 gelagert. Die Lagerung ist insbesondere so ausgeführt, dass jedes Steuerelement 23, 24 an der zugeordneten Lagerstelle 26 relativ zum Ventilgehäuse 2 um eine Schwenkachse 27 gemäß Doppelpfeil 28 verschwenkbar ist. Beide Steuerelemente 23, 24 sind dabei um eine gemeinsame Schwenkachse 27 verschwenkbar, die sich rechtwinkelig zur Hauptachse 4 erstreckt und dabei zugleich in einer zu den Längsachsen der beiden Kanalmündungen 12, 13 rechtwinkeligen Ebene.

Exemplarisch ist die Schwenklagerung durch eine Schneidenlagerung realisiert. Jedes Steuerelement 23, 24 liegt mit seinem ersten Endabschnitt 25 auf der linienförmig konturierten Spitze eines vergleichbar den Erhebungen 17 von der ersten Wandung 15 weg in die Ventilkammer 3 hineinragenden Lagerungsvorsprung 32 auf, gegen den es durch erste Federmittel 33 vorgespannt ist. Die ersten Federmittel 33 befinden sich auf der der ersten Wandung 5 entgegengesetzten Seite der Steuerelemente 23, 24 und drücken von dort her gegen den jeweiligen ersten Endabschnitt 25. Bevorzugt sind sie als Blattfedern aus gebildet, die einenends den jeweiligen ersten Endabschnitt 25 beaufschlagen und sich andernends am Ventilgehäuse 2 abstützen. Letzteres geschieht über einen Abstützabschnitt 34, der bevorzugt einstückig mit den beiden Blattfedern der ersten Federmittel 33 ausgebildet ist. Er stützt sich von innen her an einer der ersten Wandung 5 gegenüberliegenden zweiten Wandung 35 des Ventilgehäuses 12 ab.

Zur Fixierung der Steuerelemente 23, 24 bezüglich dem Ventilgehäuse 2 in ihrer Längsrichtung können von der ersten Wandung 5 in die Ventilkammer 3 hinein wegragende Haltebolzen 39 vorhanden sein, die jeweils in eine Aussparung 40 des zu fixierenden Steuerelementes 23, 24 eingreifen.

Abgesehen von der geschilderten Lagerungsart könnten die Steuerelement 23, 24 auch auf andere Weise bezüglich dem Ventilgehäuse 2 drehgelagert werden, um die gewünschte Schwenkbeweglichkeit zu erreichen.

In dem dem ersten Ventilsitz 15 gegenüberliegenden Bereich ist das erste Steuerelement 23 mit einem ersten Verschlussmittel 36 versehen. In gleicher Weise verfügt das zweite Steuerelement 24 in dem dem zweiten Ventilsitz 16 gegenüberliegenden Bereich über ein zweites Verschlussmittel 37. Die Verschlussmittel 36, 37 bestehen beispielhaft von jeweils einem aus Material mit gummielastischen Eigenschaften bestehenden Plättchen, das an das zugeordnete Steuerelement 23, 24 angeklebt oder dort auf andere Weise befestigt ist. Es kann sich aber auch um eine Beschichtung des Steuerelement 23, 24 handeln. Im einfachsten Fall wird das Verschlussmittel 36, 37 unmittelbar von dem Steuerelement 23, 24 gebildet.

Im Rahmen der Schwenkbewegung 28 kann jedes Steuerelement23, 24 in wahlweise einer ersten Betriebsstellung oder mindestens einer zweiten Betriebsstellung positioniert werden. Die erste Betriebsstellung ist dadurch gekennzeichnet, dass das am zugeordneten Steuerelement 23, 24 angeordnete Verschlussmittel 36 oder 37 an dem gegenüberliegenden Ventilsitz 15 oder 16 dichtend anliegt und mithin eine Schließstellung einnimmt, in der es die zugehörige erste oder zweite Kanalmündung 12, 13 dicht verschließt. Die zweite Betriebsstellung ist dadurch gekennzeichnet, dass das am betreffenden Steuerelement 23, 24 angeordnete Verschlussmittel 36 oder 37 vom gegenüberliegenden Ventilsitz 15 oder 16 abgehoben ist und folglich eine Offenstellung einnimmt, in der eine fluidische Verbindung zwischen dem offenen Ventilkanal 6 oder 7 und der Ventilkammer 3 vorliegt.

Die von dem Steuerelement 23, 24 in der zweiten Betriebsstellung eingenommene Relativposition bezüglich dem Ventilgehäuse 2 kann variieren. Dementsprechend kann ein unterschiedlich großer Abstand zwischen dem an dem Steuerelement 23, 24 angeordneten Verschlussmittel 36, 37 und dem diesem gegenüberliegendem Ventilsitz 15, 16 vorliegen. Somit können unterschiedliche Offenstellungen für ein jeweiliges Verschlussmittel 36, 37 vorgegeben werden, in denen unterschiedlich große Strömungsquerschnitte für das zwischen dem ersten oder zweiten Ventilkanal 6, 7 und der Ventilkammer überströmende Fluid freigegeben sind.

Bei einer üblichen Betriebsweise wird der erste Ventilkanal 6 als mit einer Druckquelle verbundener Speisekanal, der zweite Ventilkanal als mit der Atmosphäre verbundener Entlüftungskanal und der dritte Ventilkanal 8 als mit einem Verbraucher verbundener Arbeitskanal genutzt. Nehmen hier beide Verschlussmittel 36, 37 gleichzeitig die Schließstellung ein, ist der dritte Ventilkanal 8 (Arbeitskanal) von sowohl dem ersten als auch dem zweiten Ventilkanal 6, 7 abgetrennt und das ihm zuvor zugeführte Fluidvolumen ist eingesperrt. Bei in einer Offenstellung befindlichem erstem Verschlussmittel 36 und gleichzeitig in Schließstellung befindlichem zweitem Verschlussmittel 37 ist der dritte Ventilkanal vom zweiten Ventilkanal 7 abgesperrt und zur Speisung mit Fluid mit dem ersten Ventilkanal 6 verbunden. Nimmt das zweite Verschlussmittel 37 eine Offenstellung ein und befindet sich gleichzeitig das erste Verschlussmittel 36 in der Schließstellung, liegt eine Verbindung zwischen dem dritten Ventilkanal 8 und dem zweiten Ventilkanal 7 vor, sodass der dritte Ventilkanal 8 (Arbeitskanal) entlüftet wird.

Das Ventil 1 lässt sich zur Steuerung jedes beliebigen Fluides einsetzen, wird aber vorwiegend für einen Betrieb mit Druckluft eingesetzt.

Den den ersten Endabschnitten 25 entgegengesetzten zweiten Endabschnitten 38 der beiden Steuerelemente 23, 24 sind elektrisch aktivierbare Antriebsmittel in Gestalt einer elektrodynamischen Antriebseinrichtung 42 zugeordnet. Hierbei kooperiert eine einzige elektrodynamische Antriebseinrichtung 42 mit gleichzeitig beiden Steuerelementen 23, 24, um diese zu betätigen und in der gewünschten Betriebsstellung zu positionieren. Mit anderen Worten handelt es sich bei der Antriebseinrichtung um ein elektrodynamisches Magnet-Spulen-System, wie es unter anderem häufig auch in Lautsprechern zur Anwendung gelangt.

Die elektrodynamische Antriebseinrichtung 42 enthält zwei miteinander in Wechselwirkung tretende Antriebseinheiten, wovon die eine als Permanentmagneteinheit 43 und die andere als elektrisch bestrombare Spuleneinheit 44 ausgebildet ist. Die Permanentmagneteinheit 43 greift am zweiten Endabschnitt 38 des ersten Steuerelementes 23 an, die Spuleneinheit 44 am zweiten Endabschnitt 38 des zweiten Steuerelementes 24. Das "Angreifen" geschieht insbesondere durch eine feste Verbindung mit dem zugeordneten Steuerelement 23, 24, derart, dass eine starre Baueinheit zwischen jedem Steuerelement 23, 24 und der diesem zugeordneten Antriebseinheit 43, 44 vorliegt.

Die beiden Antriebseinheiten 43, 44 sind so angeordnet, dass sie sich in der Richtung der Schwenkbewegung 28 gegenüberliegen. Dabei tauchen sie je nach Betriebsstellung des Ventils 1 mehr oder weniger weit ineinander ein. Der Aufbau entspricht insbesondere einem sogenannten Tauchspulenprinzip, wobei die Spuleneinheit 44 mehr oder weniger weit in die Permanentmagneteinheit 43 eintauchen kann.

Beim Ausführungsbeispiel sind die nebeneinander liegenden zweiten Endabschnitte 38 der beiden Steuerelemente 23, 24 durch in entgegengesetzte Richtungen abgewinkelte L-förmige Halteabschnitte 45, 46 verlängert. Genauer gesagt, ragt von jedem zweiten Endabschnitt 38 ein erster Schenkelabschnitt 45a, 46a in der Richtung der Schwenkbewegung 28 weg, wobei diese beiden ersten Schenkelabschnitte 45a, 46a in einander entgegengesetzte Richtungen ragen. Beim Ausführungsbeispiel ragt der erste Schenkelabschnitt 46a des zweiten Steuerelementes 24 in Richtung zur ersten Wandung 5 und der erste Schenkelabschnitt 45a des ersten Steuerelementes 23 in Richtung zur zweiten Wandung 35. An jeden ersten Schenkelabschnitt 45a, 46a schließt sich ein zweiter Schenkelabschnitt 45b, 46b an, wobei diese zweiten Schenkelabschnitte 45b, 46b in der Längsrichtung der Steuerelemente 23, 24 orientiert sind und dabei vom ersten Endabschnitt 25 wegragen.

Die elektrodynamische Antriebseinrichtung 42 sitzt in dem zwischen den beiden zweiten Schenkelabschnitten 45b, 46b definierten Zwischenraum 47. Die beiden Antriebseinheiten 43, 44 sind insbesondere an den einander zugewandten Innenflächen der beiden zweiten Schenkelabschnitte 45b, 46b angeordnet.

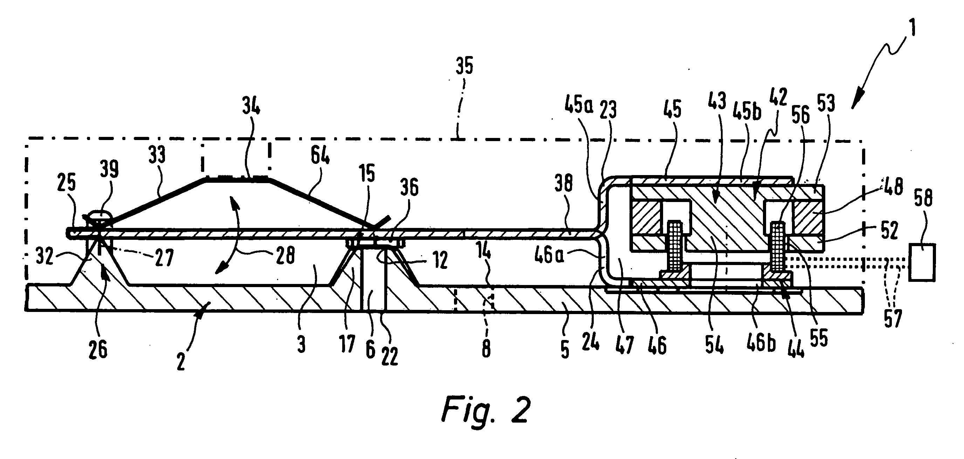

Die beiden Steuerelemente 23, 24 sind quer zu ihren Längsachsen nebeneinander angeordnet. Dadurch sind ihre Längsachsen beabstandet zueinander. Die Halteabschnitte 45, 46 sind jedoch so ausgebildet, dass sie sich jeweils quer in Richtung zum jeweils benachbarten Steuerelement 23, 24 erstrecken und somit die beiden zweiten Schenkelabschnitte 45b, 46b sich quer überlappen und in einem zentralen Bereich zu liegen kommen, der von einer Zentralebene geschnitten wird, die rechtwinkelig zu der Schwenkachse 27 zwischen den beiden Steuerelementen 23, 24 verläuft. Mit anderen Worten erstreckt sich die Zentralebene in einer zur Zeichenebene der Figuren 2 bis 4 parallelen Ebene.

Parallel zu der genannten Zentralebene mit Querabstand zu dieser verlaufen die Auslenkebenen, in denen sich die Steuerelemente 23, 24 bei Ausführung ihrer Schwenkbewegung 28 bewegen.

Bei dem bevorzugten Ausführungsbeispiel enthält die Permanentmagneteinheit einen Permanentmagnetring 48, dessen Längsachse in der schon erwähnten Zentralebene verläuft oder in einer dazu parallelen Ebene. An seinen beiden Stirnseiten ist er von einer vorderen (52) und einer rückseitigen (53) ferritischen Polscheibe flankiert. Die rückseitige Polscheibe 53 sitzt an dem zweiten Schenkelabschnitt 45b und trägt einen zentralen Eisenkern 54, der mit Radialabstand koaxial in den Permanentmagnetring 48 hineinragt.

Die der Spuleneinheit 44 zugewandte vordere Polscheibe 52 ist ringförmig ausgebildet und verfügt über eine zentrale Durchbrechung 59, in die der Eisenkern 54 mit radialem Abstand hineinragt. Somit ist zwischen einerseits dem Eisenkern 54 und andererseits dem Permanentmagnetring 48 und der vorderen Polscheibe 52 ein Ringspalt 55 definiert, der zur Spuleneinheit 44 hin offen ist.

Die Spuleneinheit 44 ist an der Innenfläche des zweiten Schenkelabschnittes 46b des zweiten Steuerelementes 24 befestigt und enthält eine eine geeignete Anzahl von Wicklungen aufweisende Spule 55, die im Wesentlichen koaxial zu der Permanentmagneteinheit 43 angeordnet ist. Ihre rückwärtige Stirnseite ist dem zweiten Schenkelabschnitt 46b zugewandt, ihre freie, vordere Stirnseite der Spuleneinheit 44. Mit dieser freien vorderen Stirnseite voraus taucht die Spule 56 in den Ringraum 55 ein.

Entsprechend der jeweiligen Relativposition der beiden Steuerelemente 23, 24 taucht die Spule 56 mehr oder weniger weit in die Permanentmagneteinheit 43 ein.

Von der Spule 56 gehen strichpunktiert angedeutete elektrische Leiter 57 ab, die aus dem Ventilgehäuse 2 herausgeführt sind und an die eine elektrische oder elektronische Steuereinrichtung 58 angeschlossen oder anschließbar ist. Die elektrischen Leiter 57 sind flexibel, um die Bewegung der Spuleneinheit 44 nicht zu behindern. Sie können alternativ auch über das zugeordnete zweite Steuerelement 24 hinweg geführt sein.

Die Steuereinrichtung 58 kann eine eigenständige Komponente sein oder mit dem Ventil 1 zu einer Baueinheit zusammengefasst sein. Über sie wird die erforderliche Betätigungsspannung an die Spule 56 angelegt und erfolgt mithin die Bestromung der Spule 56.

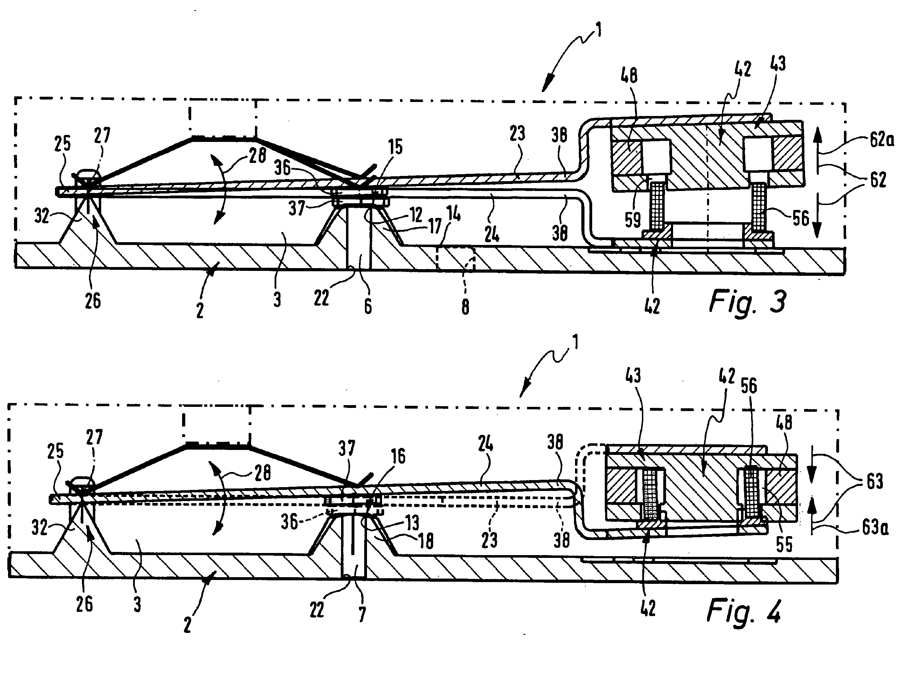

Über die Steuereinrichtung 58 kann die Spuleneinheit 44 in zwei entgegengesetzten Richtungen bestromt werden. Der Stromfluss ist also in seiner Richtung umkehrbar. Damit lässt sich die Kraftwirkung zwischen den beiden Antriebseinheiten 43, 44 variieren. Bei der einen Bestromungsrichtung ziehen sich die beiden Antriebseinheiten 43, 44 an, bei der anderen Bestromungsrichtung stoßen sie sich ab. Auf diese Weise lassen sich prinzipiell zwei einander entgegengesetzt gerichtete Relativbewegungen generieren, die in Figuren 3 und 4 durch im einen Fall voneinander wegweisende und im anderen Fall zueinander weisende Richtungspfeile als erste und zweite Relativbewegungen 62, 63 kenntlich gemacht sind.

Das Antriebsprinzip der elektrodynamischen Antriebseinrichtung 42 basiert darauf, dass der in der Spuleneinheit 44 rechtwinkelig zum magnetischen Feld der Permanentmagneteinheit 43 fließende Strom eine zur Stromrichtung und zur Feldlinienrichtung rechtwinkelige Betätigungskraft hervorruft, deren Richtung von der Stromflussrichtung abhängt. Somit kann durch Wechseln der Stromflussrichtung die Richtung der Betätigungskraft umgekehrt werden, um die beiden zugeordneten Steuerelemente 23, 24 entweder im Sinne einer ersten Relativbewegung 62 (hier: voneinander weg gerichtet) oder im Sinne einer entgegengesetzten zweiten Relativbewegung 63 (hier: zueinander hin gerichtet) zu beaufschlagen.

Durch die Steuereinrichtung 58 kann auch die Stromstärke variabel vorgegeben werden. Auf diese Weise lässt sich die Wegstrecke bzw. der Hub der beiden Relativbewegungen 62, 63 variabel vorgeben. Der Hub ist verantwortlich für die jeweils eingenommene Offenstellung und folglich für den in der Offenstellung freigegebenen Strömungsquerschnitt.

Die Steuerelemente 23, 24 sind zweckmäßigerweise so angeordnet, dass bei elektrisch nicht aktivierter elektrodynamischer Antriebseinrichtung 42, wenn also weder elektrodynamische Antriebskräfte noch elektrodynamische Abstoßungskräfte wirken, die oben erläuterte Grundstellung vorliegt. Hier nehmen dann beide Verschlussmittel 36, 37 die Schließstellung ein. Damit eine klar definierte Grundstellung erhalten wird, sind zweite Federmittel 64 vorhanden, die in der Schließrichtung auf die Steuerelemente 23, 24 einwirken und folglich die Verschlussmittel 36, 37 in die Schließstellung vorspannen.

Die zweiten Federmittel 64 wirken zweckmäßigerweise unabhängig voneinander auf die beiden Steuerelemente 23, 24 ein. Somit wirkt sich die entgegen der Federkraft erfolgende Auslenkung des jeweils einen Steuerelementes nicht auf die Federvorspannung des jeweils anderen Steuerelementes aus.

Beim Ausführungsbeispiel bestehen die zweiten Federmittel 64 vergleichbar den ersten Federmitteln 33 aus zwei nebeneinander angeordneten Blattfedern, die einenends auf jeweils eines der Steuerelemente 23, 24 einwirken und sich andernends jeweils gegenüber dem Ventilgehäuse 2 abstützen.

Vorzugsweise sind die zweiten Federmittel 64 wie die ersten Federmittel 33 einstückig mit dem oben geschilderten Abstützabschnitt 34 verbunden, sodass sich beide Federmittel 33, 64 über den Abstützabschnitt 64 gemeinsam am Ventilgehäuse 2 abstützen können. Ausgehend von dem Abstützabschnitt 34 ragen die beiden Federmittel 33, 64 zweckmäßigerweise mit schrägem Verlauf nach entgegengesetzten Seiten in Richtung der Längsachse 4 weg, um mit ihren freien Endabschnitten lose an den Steuerelementen 23, 24 anzuliegen und diese zu beaufschlagen. Die zweiten Federmittel 64 beaufschlagen die Steuerelemente 23, 24 insbesondere in dem den beiden Ventilsitzen 16, 15 gegenüberliegenden Bereich.

Ersichtlich liegen beim Ausführungsbeispiel die beiden Ventilsitze 15, 16 auf der gleichen Seite der beiden Steuerelemente 23, 24. Gleichzeitig liegen die Ventilsitze 15, 16 und mithin auch die beiden Verschlussmittel 36, 37 axial zwischen der Antriebseinrichtung 42 und den gehäuseseitigen Lagerstellen 26. Die letztgenannte Gegebenheit hat den Vorteil, dass durch bei der Herstellung erfolgende Variation des Abstandes zwischen den Ventilsitzen 15, 16 und den Lagerstellen 26 der maximale Hub der Verschlussmittel 36, 37 und auch die Kraft, mit der die Verschlussmittel 36, 37 durch die Antriebseinrichtung 42 gegen die Ventilsitze 15, 16 gedrückt werden, variabel vorgebbar ist. Damit kann die Kraft-Weg-Kennlinie der Anordnung an die für die jeweilige Anwendung geforderten Werte problemlos angepasst werden.

Das Betriebsverhalten des Ventils 1 des Ausführungsbeispiels hat auf Grund der geschilderten konstruktiven Gegebenheiten die Eigenart, dass je nach Bestromungsrichtung der Spuleneinheit 44, ausgehend von der Grundstellung entweder das eine oder das andere Verschlussmittel 36 oder 37 in die Offenstellung bewegt wird, während zugleich das andere Verschlussmittel 37 bzw. 36 in der Schließstellung verbleibt. Dafür verantwortlich sind insbesondere die nachstehend aufgeführten Umstände.

Je nach Bestromungsrichtung wirken zwischen der Spuleneinheit 44 und der Permanentmagneteinheit 43 wie erwähnt entweder abstoßende Kräfte im Sinne einer Erzeugung der ersten Relativbewegung 62 oder anziehende Kräfte im Sinne einer Erzeugung der zweiten Relativbewegung 63. Hierbei wird jeweils eines der Steuerelemente 23 oder 24 in Richtung des ihm zugeordneten Ventilsitzes 15, 16 beaufschlagt und dadurch sein Verschlussmittel 36 oder 37 gegen diesen Ventilsitz 15, 16 gedrückt. In der ersten aktivierten Stellung gemäß Figur 3 wird auf diese Weise das mit dem zweiten Steuerelement 24 bewegungsgekoppelte zweite Verschlussmittel 37 gegen den ihm zugeordneten zweiten Ventilsitz 16 gedrückt. In der zweiten aktivierten Stellung gemäß Figur 4 ist es das oberhalb der Zeichnungsebene liegende und deshalb nur gestrichelt angedeutete erste Steuerelement 23, das das an ihm angeordnete erste Verschlussmittel 36 gegen den ersten Ventilsitz 15 drückt.

Das Zusammenwirken mit einem Ventilsitz 15 oder 16 bewirkt nicht nur ein Verschließen des zugeordneten Ventilkanals 6, 7, sondern hat zugleich eine gehäusefeste Abstützung des betroffenen Steuerelementes 23, 24 zur Folge. Die Ventilsitze 15, 16 fungieren also gleichzeitig als dem Gehäuse zugeordnete Abstützmittel für die Steuerelemente 23, 24.

Derart abgestützt, kann sich das betreffende Steuerelement 23, 24 nicht bewegen. Die gesamte Stellkraft der elektrodynamischen Antriebseinrichtung 42 wird deshalb in eine Schwenkbewegung 28 ausschließlich des anderen, nicht abgestützten Steuerelementes 23 oder 24 umgewandelt. Dieses bewegt sich gemäß Pfeilrichtung 62a, 63a folglich vom zugeordneten Ventilsitz 15, 16 weg, sodass das mit ihm bewegungsgekoppelte erste oder zweite Verschlussmittel 36, 37 in eine Offenstellung bewegt wird.

Die beiden Relativbewegungen 62, 63 äußern sich bei diesem Anwendungsfall also jeweils nur in einer Bewegung des einen Steuerelementes (in Figur 3 das erste Steuerelement 23 und in Figur 4 das zweite Steuerelement 24), relativ zu dem bezüglich dem Ventilgehäuse 2 abgestützten und deshalb sich nicht bewegenden jeweils anderen Steuerelement.

Die Steuerelemente 23, 24 sind insbesondere derart starr ausgebildet, dass sie bei den im Betrieb anfallenden Belastungsfällen und insbesondere auf Grund der durch die Hebelwirkung wirksamen Biegemomente keine oder zumindest keine relevante Durchbiegung erfahren. Dadurch ist gewährleistet, dass die Relativbewegungen 62, 63 durch reine Schwenkbewegungen der Steuerelemente 23, 24 um die Lagerstellen 26 ausgeführt werden.

In einer alternativen Bauform sind die Steuerelemente im Bereich der Lagerstellen 26 fest und unverschwenkbar im Ventilgehäuse 2 eingespannt, wobei sie gleichzeitig derart federelastisch biegbar ausgebildet sind, dass sie durch die Stellkräfte der Antriebseinrichtung 42 zur Ausführung der Schwenkbewegung 28 in ihrer Auslenkebene verbiegbar sind.

In allen Fällen ist es jedoch von Vorteil, wenn die Steuerelemente 23, 24 ihre Schwenkbewegungen 28 ohne gegenseitige Beeinflussung, also unabhängig voneinander, ausführen können. Dies erreicht man am besten dadurch, dass die Steuerelemente 23, 24 als separate Bauteile realisiert sind. Dies ermöglicht auch eine einfache Herstellung. Sind die Steuerelemente elastisch biegbar und an den Lagerstellen fest eingespannt, können sie an ihren ersten Endabschnitten 25 auch zu einem einstückigen Bauteil vereinigt sein.

Während beim Ausführungsbeispiel die Verschlussmittel 36, 37 direkt an den Steuerelementen 23, 24 angeordnet sind, wäre auch eine Bauform möglich, bei der es sich um separate Komponenten handelt, die direkt oder indirekt miteinander bewegungsgekoppelt sind.

Beim Ausführungsbeispiel sind die beiden Antriebseinheiten 43, 44 kreisförmig konturiert. Andere Formgebungen sind jedoch ebenfalls möglich, beispielsweise länglich, rechteckig oder oval, insbesondere mit einer Längsausrichtung parallel zur Längsachse der Steuerelemente 23, 24.

Die beiden Antriebseinheiten 43, 44 sind zweckmäßigerweise ausschließlich an den Steuerelementen 23, 24 aufgehängt. Dadurch ergibt sich eine im Übrigen frei schwebende Anordnung in der Ventilkammer 3. Eine Befestigung der Komponenten am Ventilgehäuse 2 ist nicht vorgesehen. Folglich ist die Anordnung relativ unempfindlich gegenüber Fertigungs- und Montagetoleranzen und lässt sich sehr einfach montieren.

In dem Spalt zwischen der Permanentmagneteinheit 43 und der Spuleneinheit 44 kann in vorteilhafter Weise ein sogenanntes Ferrofluid angeordnet sein. Es befindet sich dort, wo ansonsten der Luftspalt um die Spule 56 angeordnet ist. Es bewirkt eine optimierte Wärmeabfuhr und mithin Kühlung des Systems und zugleich eine Dämpfung der Relativbewegungen 62, 63 zur Vermeidung unerwünschter Schwingungen.

Es ist nicht zwingend erforderlich, dass beide Verschlussmittel 36, 37 in der Grundstellung eine Schließstellung einnehmen. Möglich wäre auch eine Bauform, bei der in der Grundstellung nur eines der Verschlussmittel die Schließstellung und das andere Verschlussmittel eine Offenstellung einnimmt. Ebenfalls denkbar wäre eine Bauform, bei der sich die Grundstellung durch eine gleichzeitige Offenstellung beider Verschlussmittel 36, 37 auszeichnet. Hier findet dann bei der elektrischen Aktivierung der Antriebseinrichtung 42 zumindest anfänglich eine Relativbewegung 62 oder 63 dahingehend statt, dass sich gleichzeitig beide Steuerelemente 23, 24 bewegen, und zwar solange, bis das eine der Steuerelemente 23 oder 24 mit seinem Verschlussmittel 36, 37 am zugeordneten Ventilsitz 15, 16 zur Anlage gelangt.

## Patentansprüche

1. Ventil, mit zwei in einem Ventilgehäuse (2) relativ zu diesem und relativ zueinander bewegbar angeordneten ersten und zweiten Steuerelementen (23, 24), von denen das erste Steuerelement (23) mit einem einem ersten Ventilsitz (15) zugeordneten ersten Verschlussmittel (36) und das zweite Steuerelement (24) mit einem einem zweiten Ventilsitz (16) zugeordneten zweiten Verschlussmittel (37) bewegungsgekoppelt ist, wobei jedes Verschlussmittel (36, 37) durch Betätigung des mit ihm bewegungsgekoppelten Steuerelementes (23, 24) in einer am zugeordneten Ventilsitz (15, 16) anliegenden Schließstellung oder in mindestens einer mehr oder weniger weit von diesem Ventilsitz (15, 16) abgehobenen Offenstellung positionierbar ist, und mit elektrisch aktivierbaren Antriebsmitteln zum Betätigen der Steuerelemente (23, 24), **dadurch gekennzeichnet, dass** die Antriebsmittel als den beiden Steuerelementen (23, 24) gemeinsam zugeordnete elektrodynamische Antriebseinrichtung (42) ausgebildet sind, die zwei zusammenwirkende, relativ zueinander und relativ zum Ventilgehäuse (2) bewegliche Antriebseinheiten in Form einer Permanentmagneteinheit (43) und einer elektrisch bestrombaren Spuleneinheit (44) enthält, wobei die Permanentmagneteinheit (43) an dem ersten Steuerelement (23) und die Spuleneinheit (44) an dem zweiten Steuerelement (24) angreift, derart, dass die Steuerelemente (23, 24) durch entgegengesetzte Bestromung der Spuleneinheit (44) im Sinne der Ausführung zweier einander entgegengesetzt gerichteter Relativbewegungen (62, 63) antreibbar sind.

2. Ventil nach Anspruch 1, durch **gekennzeichnet**, dass die beiden Antriebseinheiten (43, 44) derart ausgebildet sind, dass sie in Abhängigkeit von ihrer Relativposition mehr oder weniger weit ineinander eintauchen.

3. Ventil nach Anspruch 2, durch **gekennzeichnet**, dass die elektrodynamische Antriebseinrichtung (42) nach dem Tauchspulenprinzip aufgebaut ist, wobei die Spuleneinheit (44) in Abhängigkeit von der Relativposition der beiden Antriebseinheiten (43, 44) mehr oder weniger weit in die Permanentmagneteinheit (43) eintaucht.

4. Ventil nach Anspruch 2 oder 3, durch **gekennzeichnet**, dass die Permanentmagneteinheit (43) einen stirnseitig von zwei ferritischen Polscheiben (52, 53) flankierten Permanentmagnetring (48) aufweist, wobei von der einen Polscheibe (53) ein Eisenkern (54) koaxial in den Permanentmagnetring (48) hinein vorsteht und der Eisenkern (54) zusammen mit dem Permanentmagnetring (48) und der mit einer zentralen Durchbrechung versehenen anderen Polscheibe (52) einen Ringspalt (55) begrenzt, in den eine Spule (56) der Spuleneinheit (44) koaxial eintaucht.

5. Ventil nach einem der Ansprüche 1 bis 4, durch **gekennzeichnet**, dass eine Steuereinrichtung (58) zur Vorgabe der Bestromungsrichtung der Spuleneinheit (44) vorhanden ist die, zweckmäßigerweise zur variablen Vorgabe der Bestromungsintensität der Spuleneinheit (44) ausgebildet ist.

6. Ventil nach einem der Ansprüche 1 bis 5, durch **gekennzeichnet**, dass die Verschlussmittel (36, 37) und Ventilsitze (15, 16) derart angeordnet sind, dass bei einer Aktivierung der Steuerelemente (23, 24) im Sinne der einen Relativbewegung (62) lediglich das eine Verschlussmittel (37) und bei einer Aktivierung der Steuerelemente (23, 24) im Sinne der anderen Relativbewegung (63) lediglich das andere Verschlussmittel (36) unter Einnahme seiner Schließstellung an den zugeordneten Ventilsitz (16, 15) angedrückt wird und **dadurch** das jeweils andere Verschlussmittel (36, 37) von seinem Ventilsitz (15, 16) unter Einnahme einer Offenstellung abgehoben wird, wobei zweckmäßigerweise in der bei unbestromter Spuleneinheit (44) vorliegenden Grundstellung beide Verschlussmittel (36, 37) die Schließstellung einnehmen, derart, dass bei anschließender Bestromung der Spuleneinheit (44) je nach Bestromungsrichtung das eine oder andere Verschlussmittel (36, 37) in die Offenstellung bewegt wird, während das andere Verschlussmittel (37, 36) in der Schließstellung verbleibt.

7. Ventil nach einem der Ansprüche 1 bis 6, durch **gekennzeichnet**, dass die beiden Ventilsitze (15, 16) jeweils die Kanalmündung (12, 13) eines in eine Ventilkammer (3) einmündenden Ventilkanals (6, 7) umrahmen, wobei ein von den Verschlussmitteln (36, 37) nicht gesteuerter dritter Ventilkanal (8) ebenfalls in die Ventilkammer (3) einmündet.

8. Ventil nach einem der Ansprüche 1 bis 7, durch **gekennzeichnet**, dass die Verschlussmittel (36, 37) am jeweils zugeordneten Steuerelement (23, 24) unmittelbar angeordnet sind.

9. Ventil nach einem der Ansprüche 1 bis 8, durch **gekennzeichnet**, dass die beiden Steuerelemente (23, 24) jeweils lamellenförmig ausgebildet sind, wobei sie zweckmäßigerweise
durch die Antriebseinrichtung (42) in zueinander parallelen oder zusammenfallenden Auslenkebenen auslenkbar sind.

10. Ventil nach Anspruch 9, durch **gekennzeichnet**, dass die beiden lamellenförmigen Steuerelemente (23, 24) längsseits nebeneinanderliegend angeordnet sind.

11. Ventil nach Anspruch 9 oder 10, durch **gekennzeichnet**, dass die Antriebseinrichtung (42) im Bereich zweier benachbarter Endabschnitte (38) der beiden Steuerelemente (23, 24) angeordnet ist.

12. Ventil nach Anspruch 11, durch **gekennzeichnet**, dass die lamellenförmigen Steuerelemente (23, 24) an ihren der Antriebseinrichtung (42) entgegengesetzten Endabschnitten (25) am Ventilgehäuse (2) gelagert sind, wobei zweckmäßigerweise die Steuerelemente (23, 24) bezogen auf die durch die Antriebseinrichtung (42) hervorrufbare Belastung starr ausgebildet und an ihren der Antriebseinrichtung (42) entgegengesetzten Endabschnitten (25) bezüglich dem Ventilgehäuse (2) in unabhängig voneinander verschwenkbarer Weise gelagert sind.

13. Ventil nach Anspruch 12 durch **gekennzeichnet**, dass die Verschlussmittel (36, 37) axial zwischen der Antriebseinrichtung (42) und den am Gehäuse gelagerten Endabschnitten (25) der Steuerelemente (23, 24) angeordnet sind, wobei beiden Ventilsitze (15, 16) zweckmäßigerweise auf der gleichen Seite der Steuerelemente (23, 24) angeordnet sind.

14. Ventil nach einem der Ansprüche 1 bis 13, durch **gekennzeichnet**, dass Federmittel (64) vorhanden sind, durch die beide Verschlussmittel (36, 37) unabhängig voneinander in Richtung der Schließstellung vorgespannt sind.

15. Ventil nach einem der Ansprüche 1 bis 14, durch **gekennzeichnet**, dass die beiden Antriebseinheiten (43, 44) ausschließlich an den beiden Steuerelementen (23, 24) aufgehängt sind und ansonsten frei schwebend im Ventilgehäuse (2) angeordnet sind.

## Claims

1. Valve with two first and second control elements (23, 24) mounted in a valve casing (2) so as to be movable relative to the latter and relative to one another, of which the first control element (23) is movement-coupled to first closing means (36) assigned to a first valve seat (15), and the second control element (24) is movement-coupled to a second closing means (37) assigned to a second valve seat (16), wherein each closing means (36, 37) may be positioned, through actuation of the control element (23, 24) movement-coupled to it, in a closed position fitting up against the assigned valve seat (15, 16) or in at least one open position lifted to a greater or lesser extent from this valve seat (15, 16), and with electrically actuable drive means to actuate the control elements (23, 24), **characterised in that** the drive means are in the form of electrodynamic drive devices (42) jointly assigned to the two control elements (23, 24), which include two interacting drive units, movable relative to one another and relative to the valve casing (2), in the form of a permanent magnet unit (43) and an electrically energisable coil unit (44), wherein the permanent magnet unit (43) acts on the first control element (23) and the coil unit (44) on the second control element (24) in such a way that the control elements (23, 24) may be driven through opposite energisation of the coil unit (44) for the purpose of executing two relative movements (62, 63) directed in opposite directions to one another.

2. Valve according to claim 1, **characterised in that** the two drive units (43, 44) are so designed that they dip into one another to a greater or lesser extent depending on their relative position.

3. Valve according to claim 2, **characterised in that** the electrodynamic drive device (42) is constructed according to the plunger coil principle, in which the coil unit (44) dips into the permanent magnet unit (43) to a greater or lesser extent depending on the relative position of the two drive units (43, 44).

4. Valve according to claim 2 or 3, **characterised in that** the permanent magnet unit (43) has a permanent magnet ring (48) flanked at the ends by two ferritic pole discs (52, 53), wherein from the one pole disc (53) an iron core (54) extends coaxially into the permanent magnet ring (48), and the iron core (54) together with the permanent magnet ring (48) and the other pole disc (52) provided with a central opening bound an annular gap (55), into which a coil (56) of the coil unit (44) dips coaxially.

5. Valve according to any of claims 1 to 4, **characterised in that** a control unit (58) is provided to preset the direction of energisation of the coil unit (44), and is expediently designed for variable presetting of the intensity of energisation of the coil unit (44).

6. Valve according to any of claims 1 to 5, **characterised in that** the closing means (36, 37) and valve seats (15, 16) are so arranged that, in the course of activation of the control elements (23, 24) for the purpose of one relative movement (62), only the one closing means (37) is pressed, and in the course of activation of the control elements (23, 24) for the purpose of the other relative movement (63) only the other closing means (36) is pressed while adopting its closed position at the assigned valve seat (16, 15) and by this means the respective other closing means (36, 37) is lifted from its valve seat (15, 16), adopting an open position, wherein expediently in the normal position which exists with the coil unit (44) not energised, both closing means (36, 37) adopt the closed position so that, with subsequent energisation of the coil unit (44), depending on the direction of energisation, one or the other closing means (36, 37) is moved into the open position, while the other closing means (37, 36) remain in the closed position.

7. Valve according to any of claims 1 to 6, **characterised in that** the two valve seats (15, 16) each frame the passage orifice (12, 13) of a valve passage (6, 7) leading into a valve chamber (3), wherein a third valve passage (8) not controlled by the closing means (36, 37) also leads into the valve chamber (3).

8. Valve according to any of claims 1 to 7, **characterised in that** the closing means (36, 37) are directly mounted on the respectively assigned control element (23, 24).

9. Valve according to any of claims 1 to 8, **characterised in that** the two control elements (23, 24) are each lamella-shaped, wherein they are expediently deflectable by the drive device (42) into planes of deflection parallel to or congruent with one another.

10. Valve according to claim 9, **characterised in that** the two lamella-shaped control elements (23, 24) are mounted adjacent to one another on their long sides.

11. Valve according to claim 9 or 10, **characterised in that** the drive device (42) is located in the area of two adjacent end sections (38) of the two control elements (23, 24).

12. Valve according to claim 11, **characterised in that** the lamella-shaped control elements (23, 24) are supported on the valve casing (2) at their end sections (25) opposite the drive device (42), wherein expediently the control elements (23, 24) are designed to be rigid, based on the load which may be generated by the drive device (42), and are mounted with the ability to pivot independently of one another relative to the valve casing (2), at their end sections (25) opposite the drive device (42).

13. Valve according to claim 12, **characterised in that** the closing means (36, 37) are located axially between the drive device (42) and the end sections (25) of the control elements (23, 24) supported on the casing, wherein the two valve seats (15, 16) are located expediently on the same side of the control elements (23, 24).

14. Valve according to any of claims 1 to 13, **characterised in that** spring means (64) are provided which bias the two closing means (36, 37) towards the closed position, independently of one another.

15. Valve according to any of claims 1 to 14, **characterised in that** the two drive units (43, 44) are suspended solely on the two control elements (23, 24) and are otherwise mounted suspended freely in the valve casing (2).

## Revendications

1. Soupape, comportant deux premiers et seconds éléments de commande (23, 24) disposés dans un logement de soupape (2) de manière mobile par rapport à celui-ci et l'un par rapport à l'autre, dont le premier élément de commande (23) est couplé en déplacement avec un premier moyen de fermeture (36) associé à un premier siège de soupape (15) et le second élément de commande (24) est couplé en déplacement avec un second moyen de fermeture (37) associé à un second siège de soupape (16), chaque moyen de fermeture (36, 37) pouvant être positionné par actionnement de l'élément de commande (23, 24) couplé en déplacement avec lui dans une position de fermeture reposant sur le siège de soupape (15, 16) associé ou dans au moins une position ouverte relevée plus ou moins loin de ce siège de soupape (15, 16), et des moyens d'entraînement pouvant être activés électriquement pour l'actionnement de l'élément de commande (23, 24), **caractérisée en ce que** les moyens d'entraînement sont réalisés comme un dispositif d'entraînement (42) électrodynamique associé en commun aux deux éléments de commande (23, 24) qui contient deux unités d'entraînement concourantes, mobiles l'une par rapport à l'autre et par rapport au boîtier de soupape (2) sous forme d'unité à aimants permanents (43) et d'unité à bobines (44) pouvant être traversée par un courant électrique, l'unité à aimants permanents (43) étant appliquée sur le premier élément de commande (23) et l'unité à bobines (44) sur le second élément de commande (24) de telle manière que les éléments de commande (23, 24) puissent être entraînés par la mise sous tension inverse de l'unité à bobines (44) au sens de la réalisation de deux mouvements relatifs (62, 63) dirigés dans le sens opposé.

2. Soupape selon la revendication 1, **caractérisée en ce que** les deux unités d'entraînement (43, 44) sont réalisées de manière à s'enfoncer plus ou moins loin l'une dans l'autre en fonction de leur position relative.

3. Soupape selon la revendication 2, **caractérisée en ce que** le dispositif d'entraînement électrodynamique (42) est constitué selon le principe électrodynamique, l'unité à bobines (44) s'enfonçant plus ou moins loin dans l'unité à aimants permanents (43) en fonction de la position relative des deux unités d'entraînement (43, 44).

4. Soupape selon la revendication 2 ou 3, **caractérisée en ce que** l'unité à aimants permanents (43) présente un anneau à aimants permanents (48) flanqué côté avant de deux disques polaires ferritiques (52, 53), un noyau de fer (54) dépassant coaxialement dans l'anneau à aimants permanents (48) d'un disque polaire (53) et le noyau de fer (54) délimitant conjointement avec l'anneau à aimants permanents (48) et l'autre disque polaire (52) pourvu d'un perçage central, une fente annulaire (55), dans laquelle s'enfonce coaxialement une bobine (56) de l'unité à bobines (44).

5. Soupape selon l'une quelconque des revendications 1 à 4, **caractérisée en ce qu'**un dispositif de commande (58) pour la prescription du sens de mise sous tension de l'unité à bobines (44) est présent, lequel est réalisé de manière appropriée pour la prescription variable de l'intensité de mise sous tension de l'unité à bobines (44).

6. Soupape selon l'une quelconque des revendications 1 à 5, **caractérisée en ce que** les moyens de fermeture (36, 37) et les sièges de soupape (15, 16) sont disposés de telle manière que lors d'une activation des éléments de commande (23, 24) au sens d'un mouvement relatif (62), seul un moyen de fermeture (37) et lors d'une activation des éléments de commande (23, 24) au sens de l'autre mouvement relatif (63), seul l'autre moyen de fermeture (36) soit pressé en occupant sa position de fermeture contre le siège de soupape associé (16, 15) et par là-même, l'autre moyen de fermeture respectif (36, 37) soit relevé de son siège de soupape (15, 16) en occupant une position ouverte, les deux moyens de fermeture (36, 37) occupant de manière appropriée la position de fermeture dans la position de base présente en cas d'unité à bobines non traversée par un courant électrique (44) à tel point qu'en cas de mise sous tension consécutive de l'unité à bobines (44), l'un ou l'autre moyen de fermeture (36, 37) soit déplacé dans la position ouverte selon le sens de mise sous tension, alors que l'autre moyen de fermeture (37, 36) reste dans la position de fermeture.

7. Soupape selon l'une quelconque des revendications 1 à 6, **caractérisée en ce que** les deux sièges de soupape (15, 16) encadrent respectivement l'ouverture (12, 13) d'un canal de soupape (6, 7) débouchant dans une chambre de soupape (3), un troisième canal de soupape (8) non commandé par les moyens de fermeture (36, 37) débouchant aussi dans la chambre de soupape (3).

8. Soupape selon l'une quelconque des revendications 1 à 7, **caractérisée en ce que** les moyens de fermeture (36, 37) sont directement disposés sur l'élément de commande respectivement associé (23, 24).

9. Soupape selon l'une quelconque des revendications 1 à 8, **caractérisée en ce que** les deux éléments de commande (23, 24) sont réalisés respectivement en forme de lamelle, ceux-ci pouvant être déviés de manière appropriée par le dispositif d'entraînement (42) dans des plans de déviation coïncidents ou parallèles.

10. Soupape selon la revendication 9, **caractérisée en ce que** les deux éléments de commande en forme de lamelle (23, 24) sont disposés l'un à côté de l'autre dans le sens longitudinal.

11. Soupape selon la revendication 9 ou 10, **caractérisée en ce que** le dispositif d'entraînement (42) est disposé dans la zone de deux sections d'extrémité contiguës (38) des deux éléments de commande (23, 24).

12. Soupape selon la revendication 11, **caractérisée en ce que** les éléments de commande en forme de lamelle (23, 24) sont logés sur leurs sections d'extrémité (25) opposées au dispositif d'entraînement (42) sur le boîtier de soupape (2), les éléments de commande (23, 24) étant réalisés, de manière appropriée, rigides par rapport à la sollicitation pouvant être suscitée par le dispositif d'entraînement (42) et étant logés de manière à pouvoir pivoter indépendamment l'un de l'autre sur leurs sections d'extrémité (25) opposées au dispositif d'entraînement (42) par rapport au boîtier de soupape (2).

13. Soupape selon la revendication 12, **caractérisée en ce que** les moyens de fermeture (36, 37) sont disposés dans le sens axial entre le dispositif d'entraînement (42) et les sections d'extrémité (25) logées sur le boîtier des éléments de commande (23, 24), les deux sièges de soupape (15, 16) étant disposés de manière appropriée du même côté des éléments de commande (23, 24).

14. Soupape selon l'une quelconque des revendications 1 à 13, **caractérisée en ce que** des moyens de ressort (64) sont présents, précontraignant les deux moyens de fermeture (36, 37) indépendamment l'un de l'autre en direction de la position de fermeture.

15. Soupape selon l'une quelconque des revendications 1 à 14, **caractérisée en ce que** les deux unités d'entraînement (43, 44) sont exclusivement suspendues aux deux éléments de commande (23, 24) et sont disposés sinon en flottement libre dans le boîtier de soupape (2).
